# EUROPÄISCHE PATENTSCHRIFT

(11) **EP 1 182 361 B1**
(45) Veröffentlichungstag und Bekanntmachung des Hinweises auf die Patenterteilung: **01.06.2011**
(21) Anmeldenummer: 01120125.8
(22) Anmeldetag: 22.08.2001
(51) Int. Cl.: F16B 13/12, E04F 13/08, E04D 3/36

(54) **Befestigungssystem**
Fastening system
Système de fixation

(30) Priorität: 23.08.2000 DE 10041299
(43) Veröffentlichungstag der Anmeldung: 27.02.2002
(73) Patentinhaber: Gräwe, Bernd, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- DE-A- 3 318 800
- DE-A- 19 637 581
- DE-A- 19 701 122
- DE-U- 7 932 608
- DE-U- 9 410 723
- FR-A- 2 557 223

## Beschreibung

Die Erfindung betrifft ein Befestigungssystem für Bauteile an einer Wand mit einem in eine Bohrung der Wand einsetzbaren Dübelteil aus Kunststoff mit einem Hülsenschaft, der zu seinem vorderen Einsatzende hin aufspreizbar ist,
und einem davon unabhängigen Hülsenteil aus Kunststoff mit an seinem hinteren Schaftende ausgeformten tellerförmigen Halteelement,
einem als Spreizelement für den Dübelteil vorgesehenen Stift, Schraube oder dergleichen, der im Hülsenteil bis zur Anlage seines Kopfes versenkbar ist,
und wobei der Hülsenteil an den Dübelteil derart angepasst ist, dass der Hülsenteil mit Halteelement gegenüber dem Dübelteil teleskopartig verschiebbar ist, wobei das Befestigungssystem unter Verformung des Halteelementes gegenüber dem Bauteil verspannbar ist,

In diesem Zusammenhang ist unter dem Begriff Wand neben Fassadenwänden auch jede Art von Unterkonstruktion zu verstehen, auf die Bauteile, insbesondere Leichtbauteile, wie Schaumstoffkörper sowie wärme- und schallisolierende Materialien, in Form von Platten, Paneelen, Leisten etc. montiert werden.

Derartige gattungsgemäße Befestigungssysteme finden insbesondere Verwendung zur Montage von Wärmedämm-Verbundsystemen auf Putzbasis zur nachträglichen Isolation bei Sanierungs- oder Renovierungsmaßnahmen von Gebäuden. Hierbei wird üblicherweise eine Isolierschicht, beispielsweise aus Styroporplatten oder aus hochverdichteten Steinwolleplatten, auf das Mauerwerk geklebt, verdübelt sowie anschließend verputzt.

Das anfängliche Verkleben erfolgt dabei üblicherweise mit dem Setzen von Klebepunkten mit ggf. einer Klebewulst, wobei nach dem Abbinden des Klebers die Isolierplatte an den Klebstellen dann zusätzlich verdübelt wird. Die hierzu üblicherweise verwendeten Tellerdübel werden in Abhängigkeit zur Isolationsplattendicke unter Berücksichtigung von Altputz und Kleberdicke ausgewählt. Sie müssen so weit in ein vorbereitetes Bohrloch eingetrieben werden, dass der Halteteller plan auf der Isolierschicht zur Auflage kommt. Anschließend wird ein Spreizstift in den Tellerdübel eingeschlagen.

Hierbei ergeben sich die folgenden Probleme: Aufgrund einer zu großen Einschlagtiefe des Spreizstiftes wird der Halteteller zu weit in die Isolierschicht eingetrieben. Die hierdurch entstehenden Löcher in der Isolierschicht müssen ausgespachtelt werden; bei Nichtdurchführung kommt es wegen des Ansammelns von Feuchtigkeit, die gefrieren kann, zur Rissbildung bis hin zur Gefahr des Abplatzens. Außerdem besteht die Gefahr, dass der Verarbeiter, wenn er nach dem Verkleben der Isolierplatten nicht mehr feststellen kann, wo sich die Klebepunkte befinden, die Dübelbefestigungen an willkürlich ausgewählte Punkten setzt. Stimmen diese Punkte nicht mit den Klebepunkten überein, wird die Isolierplatte zwischen zwei Klebepunkten an die Wand gedrückt, um zu erreichen, dass der Halteteller des Tellerdübels plan auf der Platte aufliegt. Die sich bei diesem Verarbeitungsfehler ergebenden Dellen in der Isolierschicht müssen mit Putzmasse aufgefüllt werden, was zur Folge hat, dass unterschiedlich dicke Putzschichten entstehen mit unterschiedlichem Ausdehnungsverhalten bei thermischer Beanspruchung, was in Rissbildung resultiert.

Des weiteren besteht immer wieder die Gefahr, dass der Dübel nicht fest in der Bohrung arretiert ist bzw. sich löst, was für den Verarbeiter nicht sichtbar ist. Beispielsweise können zu starke Hammerschläge auf den Spreizstift zu Prellschlägen im Verankerungsgrund führen, die ein Lösen des Isollerdübeis in seiner Verankerung bewirken.

Durch das DE 94 10 723.8 U ist ein Befestigungselement als trittsichere Befestigung von Belägen bei Flachdächern bekannt geworden. Dort stellt sich das besondere Problem, dass trotz einer Befestigung das Flachdach noch betreten werden muß, diese Trittbelastung sich aber negativ auf die Befestigungen wegen der Bewegung der Beläge auswirkt. Es wird deshalb ein Dübel mit einem Halter durch das Einschlagen eines Nagels oder einer Schraube so verbunden, dass der Halter noch nach der Endmontage bei einer Trittbelastung einen Hub entlang des Dübelschaftes vollziehen kann und bei Trittbelastung sich wieder nach oben bewegt. Hierbei wird die Schaftverlängerung des Dübels durch die Schraube starr fixiert. Bei dem Befestigungssystem wird ein Auflagebund am hinteren Ende des Dübels gebildet, der mit einer Anschlagschulter des Halters zusammentrifft und eine Hubbegrenzung im Falle eines Betretens und Absenkens bzw. Zurückbewegung des Halters bewirkt. Der Halter bzw. Halteteller wird nicht vorgespannt.

Aus der DE 33 18 800 C2 ist ein Befestigungselement für Platten, Tafeln etc. an einer Wand bekannt, welches aus einem Kunststoff-Hülsendübel sowie aus einer mit einem Spreizelement verbundenen Kunststoff-Hülse besteht, wobei der Spreizelementkopf an seinem hinteren Schaftende mit einem daran einstückig angeformten scheiben- oder tellerartigen Kunststoffkopf fest umspritzt ist. Beim Einsteckvorgang des Befestigungselementes wird die Einstecktiefe des Hülsendübels in die Bohrung dadurch begrenzt, dass er mit einer Anschlagschulter gegen die Stirnfläche der Wand anstößt und dort sein Widerlager erhält. Eine Dübelnagelschraube wird durch Druck oder Hammerschläge in den Hülsendübel eingeschlagen, bis die Ringschulter der Kunststoffhülse gegen die Stirnfläche des Kunststoff-Hülsendübels angepresst wird und dadurch ein dichter Abschluß herbeigeführt wird.

Diese bekannte Lösung weist aber den Nachteil auf, dass nur durch entsprechende Längenvorgabe der um die Dübelschraube herumgespritzten Kunststoffhülse bei deren Herstellung das Befestigungselement exakt auf die Schichtdicke des mit seiner Hilfe zu befestigenden Bauteils abgestimmt werden kann. Dies erweist sich insbesondere durch die schwankenden Maßhaltigkeitstoleranzen der zu verarbeitenden wärmeisolierenden Schaumstoffmatten oder Glasfasermatten als nachteilig, wobei beispielsweise die für die Isolation häufig verwendeten Styroporplatten Toleranzabweichungen hinsichtlich ihrer Dicke von bis zu 5 mm aufweisen. Insgesamt erfordern sowohl das aus der DE 33 18 800 C2 als auch die bekannten einstückigen Tellerdübel eine jeweilige Anpassung des Befestigungselementes vom Hersteller aus bzw. machen einen Vorrat an entsprechend bemessenen Elementen an der Baustelle notwendig, was nicht praktikabel ist.

In der DE 197 01 122 A1 ist ein Befestigungselement zur Befestigung von auch Wärmedämm-Verbundsystem beschrieben, welches aus einer Dübelhülse mit vormontiertem Spreizelement sowie einer Hülse mit Trägerplatte besteht. Das Befestigungselement wird mit der Hülse, in deren unteren Ring die Dübelhülse mit vormontiertem Spreizelement bereits hineingesteckt ist, durch die Dämmplatte geschoben und befestigt. Dieser untere Ring bildet auch die Aufnahmefläche für den Kopf des Dübelschaftes und des Spreizelementes. Zur Anpassung an unterschiedliche Dämmschichtdicken wird hier ebenfalls vorgeschlagen, die Länge der Hülse mit Trägerplatte bzw. die Länge der Dübelhülse an die Dämmschichtdicke bereits von Herstellerseite anzupassen.

Die DE 196 37 581 A1 beschreibt ein Befestigungselement zur Befestigung von Dämmstoffplatten. Dieses Befestigungselement besteht aus einem Dübel sowie einem hülsenförmigen Abstandsabschnitt mit einem Druckteller. Nach einer Ausführungsform ist der von dem Druckteller sich unterseitig erstreckende hülsenförmige Abschnitt an seiner Innenseite mit einer Rillung versehen, in die ein zweiter, am Spreizkörper bzw. Dübel angeformter Abschnitt mit einer Außenrillung eingeführt wird. Durch Eindrücken des Drucktellers ist dieser bezüglich seines Abstandes zum Spreizkörper teleskopartig bewegbar.

Dieses System zeigt den Nachteil, dass der Dübel, wenn seine Verankerung im Bohrloch nicht ordnungsgemäß erfolgt, beim Einschlagen des Spreizstiftes unter Überwindung des im Verhältnis geringen Rillenwiderstandes von dem hülsenförmigen Abstandsabschnitt abgeschlagen werden kann. Das hat die Gefahr zur Folge, sofern ein für das teleskopartige Verschieben notwendiges tiefes Bohrloch vorliegt, dass der Spreizstift den Dübel nur tiefer treibt, aber nicht mehr aufspreizen kann.

Demgemäß liegt der Erfindung die Aufgabe zugrunde, ein Befestigungssystem der gattungsgemäßen Art dahingehend weiterzubilden, dass es den Nachteil des Stands der Technik beseitigt.

Diese Aufgabe wird erfindungsgemäß dadurch gelöst, dass zur Zusammenhaltsicherung des Dübelteils mit dem Hülsenteil einerseits der Hülsenteil mit Anschlagflächen in seinem tellerförmigen Halteelement ausgebildet ist, an denen das Spreizelement beim Einschieben in den Dübelteilunmittelbar zur Auflage kommt, wonach Dübel- und Hülsenteil ineinander verschiebbar sind und andererseits der Hülsenteil und an einem hinteren Endbereich der Dübelteil mit den teleskopierbaren Verschiebeweg zwischen Dübel- und Hülsenteil begrenzenden Anschlagflächen ausgebildet sind. Auf diese Weise wird verhindert, dass der Dübelteil beim Einschlagen des Spreizelementes mit axialer Beaufschlagung bei einem aufgrund der teleskopartigen Verschiebung notwendigen tieferen Bohrloch durchrutscht. Für eine sichere Befestigung muß das Spreizelement vollständig durch den Dübelteil ragen und das Bohrloch ausreichend tief für die anschließende teleskopartige Verschiebung beim Aufbringen der Vorspannung sein.

Nach einer besonders bevorzugten Weiterbildung wird vorgeschlagen, dass das Befestigungssystem Anschlagmittel aufweist, die als Verlängerung des hinteren Endes des Hülsenschaftes über eine äußere Abstützschulter des Dübelteils hinaus ausgebildet sind. Es lässt sich damit gewährleisten, dass bei der teleskopartigen Verschiebung ein bestimmter Weg und damit eine bestimmte Vorspannung nicht überschritten wird, um eine zu große Vorspannung durch den Monteur und somit eine Beschädigung des Bauteils zu vermeiden. Diese Anschlagmittel zur Begrenzung eines Vorspannweges können am Dübelteil, am Hülsentell oder an einem Kopfaufsatz des Spreizelementes ausgebildet sein.

Um auch sehr weiche Bauteile, wie plattenförmige Isolierlatten, trotz in einem Toleranzbereich schwankender Dicken fest und gleichmäßig an der Wand zu befestigen, wird mittels des Befestigungssystems mittels des teleskopartigen Ineinanderverschiebens bzw. Gegeneinanderverschiebens der beiden Bestandteile, nämlich des Hülsenteils und des Dübelteils, eine optimale Anpassungsmöglichkeit der Dübellänge an einzelne, unterschiedlich dicke Bauteile bei der Montage gewährleistet. Das vormontierte Befestigungssystem wird in ein Bohrloch gesteckt bzw. geschlagen und der Hülsenteil gegenüber dem Dübelteil so verschoben, dass das Halteelement an der Oberfläche des Bauteils zur Anlage kommt. Hülsen- und Dübelteil sind entweder so ausgebildet, dass der Hülsenteil auf der Außenfläche des Dübelteils oder entlang dessen Innenschafts verschiebbar ist. Mittels des Spreizelementes, das als Schraube ausgebildet ist und in den Dübelteil eingreift, wird das Dübelende durch Aufspreizen gegenüber der Bohrlochwandung verspannt.

Das Halteelement wird in einem Bauteil aus einem nachgiebigen Material, wie einer Styroporplatte oder Steinwolleplatte, versenkt, so dass die Oberfläche des Halteelementes für spätere Putzschichten bündig mit der Bauteiloberfläche abschließt. Die sich ergebende Verformung des Halteelementes bietet eine sichtbare Kontrolliermöglichkeit für eine ordnungsgemäß erfolgte Befestigung bzw. eine feste Verankerung des Dübels im Mauerwerk. Durch die Anschlagmittel wird der sich nach der eigentlichen Befestigung anschließende Vorspannweg begrenzt, die damit eine Sicherung bieten, dass der Halteteller nicht zu stark in das nachgiebige Material des Bauteils eindringt.

Das Befestigungssystem erweist sich aufgrund seiner Mehrteillgkeit als fertigungstechnisch günstig. Zudem weist es in der vorgeschagenen Gestaltung keine Kälteoder Wärmebrücken in der Isolierschicht auf, wenn es sich z.B. um einen Stift aus Kunststoff handelt bzw. wenn ein metallischer Stift eine Kunststoff-Ummantelung aufweist.

Nach einer Weiterbildung der Erfindung ist mindestens ein Vorsprung entweder an dem Hülsenschaft des Dübelteils oder an dem Hülsenteil vorgesehen, der mit jeweils einer komplementären Nut in Eingriff kommt, die dann entweder am Hülsenteil oder im Dübelteil eingebracht ist. Dieses Feder-Nut-Prinzip gewährleistet einen axialen Verschiebeweg der beiden Elemente gegeneinander ohne Verdrehen sowie eine Verdrehsicherung des Dübels beim Eindrehen einer Schraube. Hierbei sind des weiteren unter dem großen Teller in dessen Randbereich Krallen bzw. krallenartige Vorsprünge zweckmäßig.

Die beiden Bestandteile Hülsenteil und Dübelteil können aus unterschiedlichen Werkstoffen hergestellt werden. Als Werkstoff für den Hülsendübel empfiehlt sich Polyamid (Nylon). Nylon zeigt gegenüber dem bisher verwendeten Polypropylen den Vorteil einer höheren Festigkeit. Zudem weist ein Nylondübel auch die notwendigen Auszugskräfte auf, weil Nylon durch das Einbringen des Schraubgewindes verformt wird und regelrecht in das Gewinde kriecht. Als Werkstoff für die Kunststoffhülse mit Halteelement empfiehlt sich gleichwohl Polypropylen, welches den Vorteil bietet, dass es den in den Putzschichten enthaltenen alkalischen und mineralischen Säuren standhält.

Bei den Ausführungsformen des Befestigungssystems mit Stopfen ist dieser vorzugsweise so ausgebildet, dass er nicht mehr bündig mit dem Halteteller abschließt, sondern über den Halteteller hinausragt. Der Stopfen selbst ist aus einem Kunststoff gefertigt, der im Verhältnis zu Polypropylen eine höhere Festigkeit aufweist, beispielsweise aus Polyamid, ABS oder Polycarbonat, damit er durch die Prellschläge nicht verformt wird und somit die Kraft auf das Spreizelement ohne Verluste weitergegeben werden kann.

Für eine bevorzugte Ausbildung von Anschlagmitteln weist das Spreizelement einen Kopfaufsatz mit einem hinteren Beaufschlagungsende und einem vorderen Ende auf, wobei dieser Kopfaufsatz an seinem hinteren Beaufschlagungsende mit einem Anschlagelement versehen ist, das auf einer entsprechenden Anschlagschulter am Hülsenteil zur Auflage im Einführungszustand kommt, und wobei das vordere Ende des Kopfaufsatzes ein Anschlagmittel in Form einer Anschlagkante aufweist, wobei am Ende des Einführungsschritts bzw. im Einsteckzustand, bei dem das Spreizelement mit dem Anschlagelement seines Kopfaufsatzes auf der Anschlagschulter des Hülsenteils zur Auflage kommt, ein Abstand (A) zwischen der Anschlagkante des Kopfaufsatzes und der äußeren Abstützschulter am Dübelteil verbleibt und wobei ein weiteres Einführen des Spreizelementes unter Vorspannung und somit der Verschiebeweg des Hülsenteils gegenüber dem Dübelteil durch diesen Abstand (A) auf ein vorgegebenes Maß beschränkt ist, nämlich auf den Abstand zwischen dem Einsteckzustand und der Lage, wenn das vordere Ende des Kopfaufsatzes mit der äußeren Abstützschulter des Dübelteils in Kontakt kommt.

Durch diesen definierten Abstand A wird der Verschiebeweg beim Vorspannschritt begrenzt und somit ein übermäßiges Zusammenpressen des empfindlichen, zu befestigenden, Isoliermaterials verhindert.

Nach einer bevorzugten Ausführungsform ist der Abstand A durch die Wahl der Steigung der Abstützschulter des Dübelteils einstellbar. In einem besonders bevorzugten Fall ist das hintere Ende des Hülsenschaftes des Dübelteils mit einemvorzugsweise - trichterförmigen Kopf ausgebildet, das die Anschlagfläche für ein komplementär ausgebildetes vorderes Anschlagende des Kopfaufsatzes bildet, wobei die Wahl der Steigung des Trichters den Versenkweg des Kopfaufsatzes in den Dübelkopf und somit den Abstand A oder einen Teilabstand vorgibt. Je steiler die Trichterform ist, desto größer ist der Versenkweg und desto größer ist der mögliche Verschiebeweg und damit die zugelassene Vorspannung.

Zudem ist alternativ oder zusätzlich der Abstand A durch die Wahl der Länge des Kopfaufsatzes einstellbar. Je kürzer der Kopfaufsatz ist, desto länger wird der Abstand A.

Hierbei soll vorzugsweise der durch die Geometrien vorgegebene Abstand A mindestens der Dicke des Halteelementes des Hülsenteils bzw. Haltetellers entsprechen bzw. größer sein, damit durch Verformung des Halteelementes und somit Vorspannung des Halteelementes eine Anpressung des Isoliermaterials zum Untergrund bzw. der Wand erfolgt.

Der erfindungsgemäß vorgeschlagene Kopfaufsatz besteht vorzugsweise aus Kunststoff und ist unlösbar mit dem Kopf des Spreizelementes bzw. Stifts und gegebenenfalls mit einem Teil des sich an den Kopf anschließenden Teils des Spreizelementschaftes verbunden. Vorteilhafterweise wird der Kopfaufsatz einstückig an den metallischen Spreizelementkopf (spritz)gegossen.

Der Kopfaufsatz besteht in seinen wesentlichen Bestandteilen aus dem Beaufschlagungsende zur Druckaufbringung mit einem Einschlagwerkzeug und dem unteren Bereich, der den Kopf des Spreizelementes aufnimmt. Hierbei ist das Beaufschlagungsende mit einem Anschlagrand versehen, der zur Positionierung des Kopfaufsatzes im Hülsenteil bzw. im Halteteller in einer entsprechenden Anschlagschulter dient. Nach einer bevorzugten Ausführungsform besteht der Kopfaufsatz des weiteren aus einer radialen Dichtfläche unterhalb des Anschlagrandes, deren Dicke in etwa der Dicke des Haltetellers an seiner dicksten Stelle entspricht, aus einem Mittelstück, umfassend einen Kunststoffkern mit Längsrillen, und einem Bereich, in den der Kopf des Spreizelementes eingegossen ist.

Weitere Einzelheiten und Vorteile der Erfindung ergeben sich aus den Unterahsprüchen und der nachfolgenden Beschreibung. Hierbei zeigen:
- Fig. 1a: eine Schnittansicht einer ersten Ausführungsform des erfindungsge- mäßen Befestigungssystems im vormontierten Zustand;
- Fig. 1b: eine Schnittansicht einer Variante der ersten Ausführungsform des erfindungsgemäßen Befestigungssystems im vormontierten Zustand mit Anschlagmitteln am Dübelteil zur Begrenung des Vorspannwe- ges;
- Fig. 2: eine Teilschnittansicht des Hülsenteils mit Halteelement und Nuten- führung als Teilelement des Befestigungssystems von Fig. 1 a oder 1b;
- Fig. 3a: eine Seitenansicht des Dübelteils als Teilelement des Befestigungs- systems von Fig. 1a;
- Fig. 3b: den Querschnitt des hinteren Endes des Hülsenschaftes des Dübel- teils nach Fig. 3a;
- Fig. 3c: eine Seitenansicht des Dübelteils als Teilelement des Befestigungs- systems von Fig. 1b;
- Fig. 3d: den Querschnitt des hinteren Endes des Hülsenschaftes des Dübel- teils nach Fig. 3c;
- Fig. 4: das in eine Wandbohrung eingeführte Befestigungselement nach Fig. 1a;
- Fig. 5a: eine Teilschnittansicht des Hülsenteils mit Halteelement der Fig. 2;
- Fig. 5b: das Befestigungselement nach Fig. 1a in der Endmontagestellung;
- Fig. 5c: das Befestigungselement nach Fig. 1b in der Endmontagestellung;
- Fig. 6a: eine Schnittansicht einer zweiten Ausführungsform des erfindungs- gemäßen Befestigungssystems;
- Fig. 6b: den oberen Ausschnitt des Befestigungssystems nach Fig. 6a mit einer Stopfenvariante;
- Fig. 7a: eine Schnittansicht einer dritten Ausführungsform des erfindungsge- mäßen Befestigungssystems;
- Fig. 7b: den oberen Ausschnitt des Befestigungssystems nach Fig. 7a mit einer Stopfenvariante;
- Fig. 8: eine Schnittansicht einer vierten Ausführungsform des erfindungs- gemäßen Befestigungssystems;
- Fig. 9: eine Schnittansicht des Befestigungssystems nach Fig. 8 im vormon- tierten Zustand;
- Fig. 10: das Befestigungselement nach Fig. 9 mit eingeführtem, aber noch nicht vorgespanntem Spreizelement;
- Fig. 11: eine Schnittansicht einer fünften Ausführungsform des erfindungs- gemäßen Befestigungssystems;
- Fig. 12: den Einschlagnagel als Spreizstift für das Befestigungssystem nach Fig. 11;
- Fig. 13: eine Schnittansicht einer sechsten Ausführungsform des erfindungs- gemäßen Befestigungssystems mit in das Bohrloch eingeführtem Dübelteil sowie mit lose eingeführtem Spreizelement;
- Fig. 14: eine Schnittansicht des Befestigungssystems nach Fig. 13 mit bereits eingeführtem, aber noch nicht vorgespanntem Spreizelement;
- Fig. 15: eine Schnittansicht des Befestigungssystems nach Fig. 13 mit vorge- spanntem Spreizelement nach Zurücklegen des Verschiebeweges bzw. des Abstandes A;
- Fig. 16: eine Schnittansicht des Hülsenteils mit Halteelement als Teilelement des Befestigungssystems von Fig. 13;
- Fig. 17: eine Draufsicht des Hülsenteils mit Halteelement bzw. Halteteller nach Fig. 16;
- Fig. 18: eine Seitenansicht des Spreizelementes mit einstückig angespritztem Kopfaufsatz aus Kunststoff;
- Fig. 19: eine Seitenansicht des Dübelteils mit trichterförmigem Dübelkopf an seinem hinteren Ende und einem aufspreizbaren Ende an seinem vorderen Abschnitt.

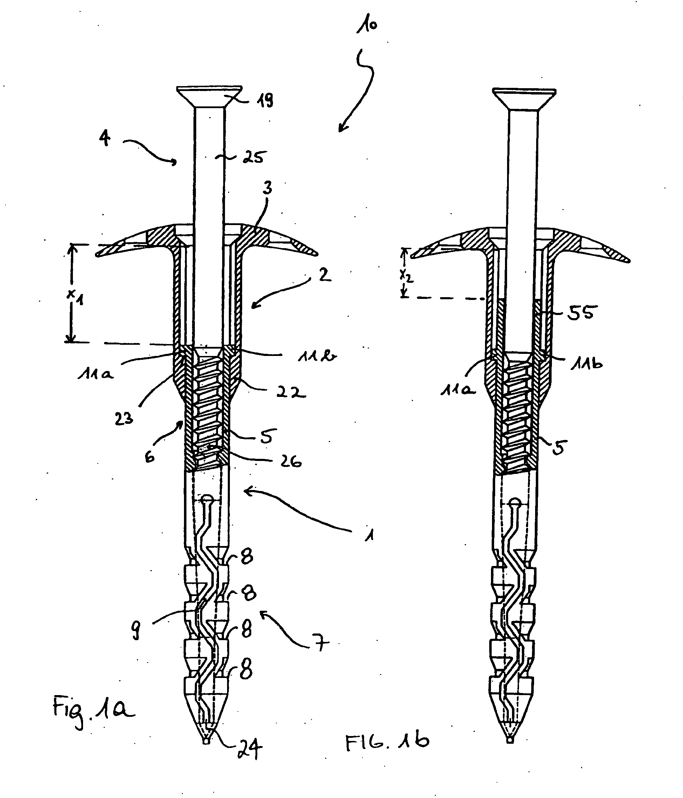

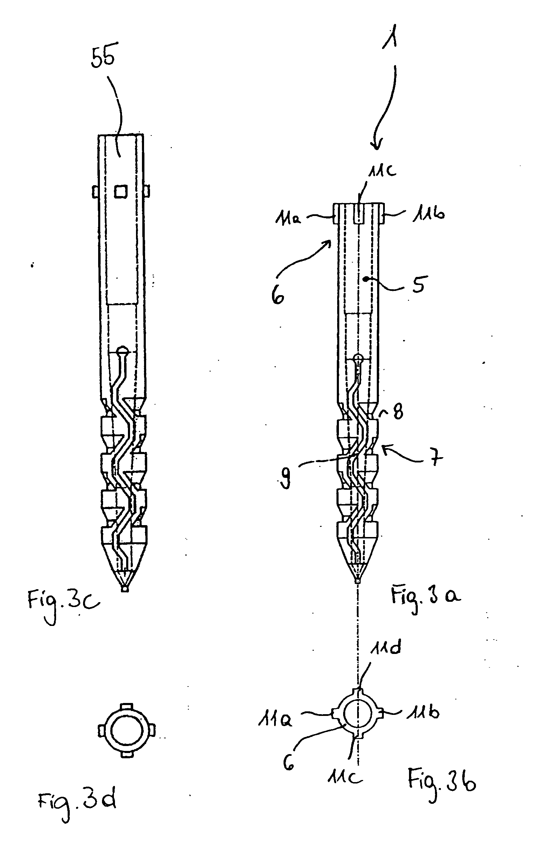

Figur 1 zeigt ein Befestigungssystem 10 nach einer ersten Ausführungsform der Erfindung im vormontierten Zustand. Das Befestigungssystem besteht aus drei wesentlichen Bestandteilen, dem Dübelteil 1, dem Hülsenteil 2 mit einstückig an dem Hülsenteil angeformten tellerförmigem Halteelement 3 bzw. Halteteller und einem Spreizelement 4, hier in Form einer Schraube. Der Dübelteil 1, der in Alleinstellung in Fig. 3a gezeigt ist, besteht aus einem Hülsenschaft 5 an seinem hinteren Ende 6, d.h. dem Ende, welches nicht in Einsatzrichtung weist, und einem sich an den Hülsenschaft 5 anschließenden vorderen aufspreizbaren Ende 7, welches mit mehreren im Abstand hintereinander liegenden, jeweils durch Umfangseinschnürungen bestimmten Verankerungskrallen 8 und in seiner Längsrichtung zickzack-, wellen-oder trapezlinienförmigen Trennschlitzen 9 versehen ist.

Der vordere Abschnitt des Dübels, d.h. das aufspreizbare Ende 7 oder die Spreizzone, kann jeweils an den Untergrund angepaßt sein, beispielsweise an Wände aus Stein oder Beton, wobei Kammersteine, Hohllochsteine, Gitterlochziegel oder dergleichen eine größere Spreizzone erfordern. Am hinteren Ende 6 weist der Hülsenschaft 5 mehrere sich jeweils gegenüberliegende Vorsprünge 11a-d auf, bei dieser Ausführungsform vier, wie in der Fig. 3b verdeutlicht. Grundsätzlich funktioniert die sich ergebende Nut-Feder-Verbindung schon mit einem einzigen Vorsprung, wobei sich insbesondere aber das Vorsehen von mindestens zwei Vorsprüngen empfiehlt, um ein Verkanten bei der Verschiebebewegung zu vermeiden. Das Feder-Nut-Prinzip weist den Vorteil auf, daß es gleichfalls die beiden Elemente Dübel- und Hülsenteil 1, 2 gegenüber Verdrehen sichert.

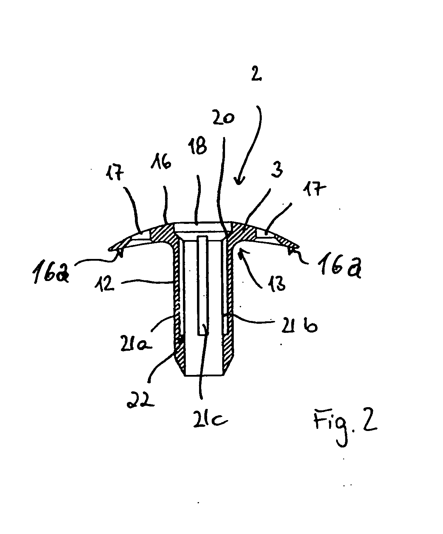

Der Hülsenteil 2 des Befestigungssystems 10 nach Fig. 1 ist in Fig. 2 als Teilelement dargestellt. Es besteht aus einem Schaft 12 mit einem am hinteren Ende 13 des Schaftes sich einstückig anschließendem tellerförmigem Halteelement 3 im Sinne eines Haltetellers oder einer Haltescheibe. Dieses Halteelement 3 weist eine im vormontierten Zustand aufgewölbte Oberfläche 16 auf, die dem Bauteil zugekehrte Seite ist nach innen gewölbt. Das Halteelement 2 selbst weist Durchbrüche 17 auf sowie an seinem Randbereich formierte, krallenartige Vorsprünge 16a (vgl. Fig. 2), die eine anfängliche Positionierung im nachgiebigen Bauteil gewährleisten. In dem Halteelement 3 ist zentrisch eine Öffnung 18 eingebracht, deren Innenflächen so an die Kontur des Kopfes 19 der Schraube 4 (vgl. Fig. 1) angepaßt sind, daß sie Anschlagflächen 20 für den Kopf 19 bilden.

In die Innenfläche des Schaftes 12 des Hülsenteils 2 sind Nuten 21a-d (d verdeckt) eingebracht, die sich von den Anschlagflächen 20 für den Nagelschraubenkopf bis zu einer Anschlagkante 22 erstrecken, die den Verschiebeweg der Vorsprünge 11 a-d in den Nuten 21 a-d begrenzt.

Im vormontierten Zustand (Fig. 1a) sind der Hülsenteil 2, der Dübelteil 1 und die Schraube 4 zu einer Einheit montiert. Es ist aber auch denkbar, daß nur der Dübelteil und die Schraube vormontiert sind, während das Halteelement kurz vor der Montage über das Einsatzende des Dübelteils aufgeschoben wird. Der Hülsenteil 2 befindet sich im gezeigten Zustand am Ende des Verschiebeweges x in einem ausgezogenen Zustand, in dem die Vorsprünge 11a-d des Dübelteils 1 als äußere Abstützschulter 23 an einer Anschlagkante 22 des Hülsenteils zur Anlage kommen, wobei sich die Anschlagkante 22 des Hülsenteils bündig an die Außenfläche des Schaftes des Dübelteils 1 anlegt. Der Hülsenteil 2 ist in Einsteckrichtung gesehen entlang des Verschiebeweges x₁ teleskopartig an der Außenfläche des Hülsenschaftes 5 des Dübelteils verschiebbar. Neben einer Zusammenhaltsicherung beim Einschlagen des Spreizelementes dient die äußere Abstützschulter 23 ebenfalls als Auseinanderziehsicherung des Hülsenteils gegenüber dem Dübelteil bei Zugrichtung auf den Hülsenteil entgegen der Einsetzrichtung.

Die Schraube 4 besteht aus einem metallischen Schaft, der in Einsatzrichtung mit einer angeformten Spitze 24 und entgegen der Einsatzrichtung mit einem angeformten Kopf 19 versehen ist, welcher sich zu einem Stiftschaft 25 hin verjüngt. Der sich unmittelbar an die Spitze der Nagelschraube anschließende Längenabschnitt des Schaftes ist mit einem Sägezahngewinde 26 versehen, das eine relativ kleine Steigung hat. Die Position der Schraube im Montagezustand ist mit gestrichelten Linien in Fig. 1 eingezeichnet. Im Schaft des Dübelteils 5 ist ebenfalls ein Gewinde eingebracht.

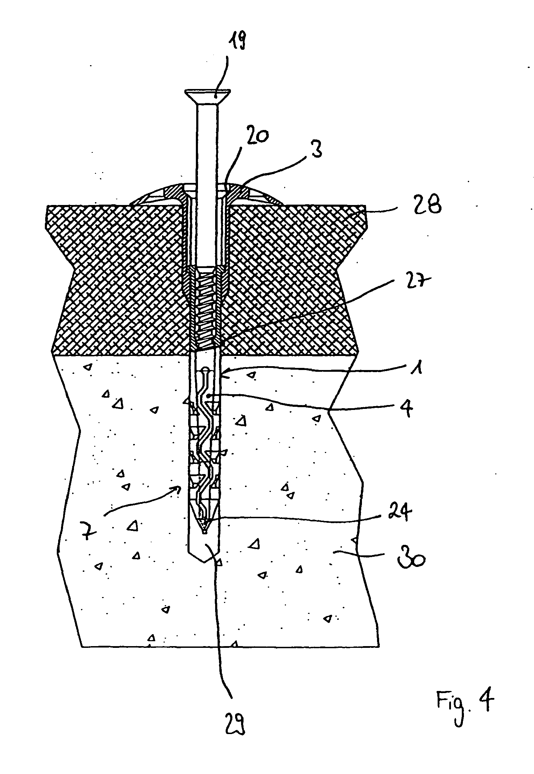

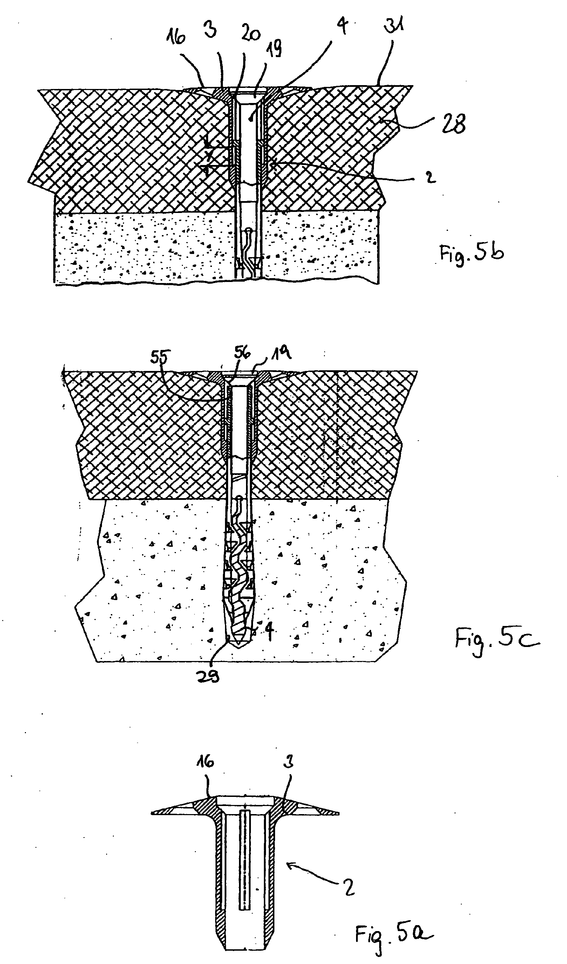

Die Montage des Befestigungssystems wird nachfolgend am Beispiel dieses ersten Ausführungsbeispiels anhand der Figuren 4 und 5a und b erläutert. Das vormontierte Befestigungssystem wird durch ein Loch 27 eines an einer Wand zu befestigenden Bauteils 28, beispielsweise einer Styroporplatte, hindurch in eine Bohrung 29 der Wand 30 eingesteckt. Dabei wird die Einstecktiefe des Dübelteils 1 in die Bohrung 29 durch den maximalen Verschiebeweg x₁ zwischen Dübel- und Hülsenteil begrenzt. Das Halteelement 3 wird entsprechend der Dicke des Bauteils durch teleskopartiges Verschieben des Hülsenteils gegenüber dem Dübelteil justiert. Beim Einschrauben der Schraube 4 dringt deren Spitze 24 in das aufspreizbare Ende 7 des Dübelteils 1 ein und verspannt den Dübelteil gegenüber der Bohrwandung. Der Kopf 19 der Schraube 4 kommt auf den Anschlagflächen 20 des Halteelementes 3 zur Anlage und verspannt das Halteelement 3 gegenüber dem Dübelteil 1. Das Halteelement 3 des Hülsenteils 2 verformt sich (vgl. Fig. 5a), indem sich die vorher gewölbte Unterseite des Haltetellers 3 begradigt. Schließlich wird das Halteelement in das Bauteil versenkt und verformt sich derart, daß die Oberseite 16 des Halteelementes bündig mit der Oberfläche 31 des Bauteils 28 abschließt (vgl. Fig. 5b). Dabei ist die sichtbare Verformung des Halteelementes 3 eine einfache Kontrolle für einen ordnungsgemäßen Verspannungszustand und somit für eine sichere Befestigung. Der Verschiebeweg zwischen Dübel- und Hülsenteil 1, 2 ist in Fig. 5b mit y bezeichnet.

Nach einer Variante weist der Dübelteil Anschlagmittel 55 zur Beschränkung des Vorspannweges auf (vg. Fig. 1b, 3c und 3d sowie Fig. 5c). Insbesondere durch Fig. 5c wird deutlich, daß der Vorspannweg durch Anschlagen der Anschlagmittel 55, die als Verlängerung des über die Vorsprünge 11a und 11b nach hinten hinaus gezogenen Dübelschaftes 5 ausgebildet sind, an die Unterkante 56 des Spreizelementkopfes 19 auf den Weg x₂ beschränkt wird. In Fig. 5c wird ebenfalls deutlich, daß die Schraube 4 bei einem vorgespannten Befestigungssystem sich über das vordere Dübelende hinaus in ein tieferes Bohrloch 29 erstreckt.

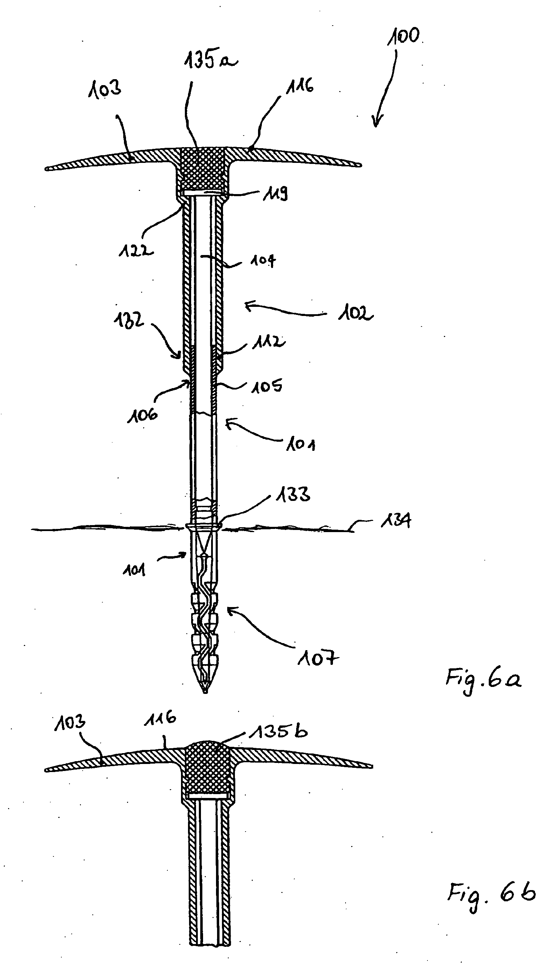

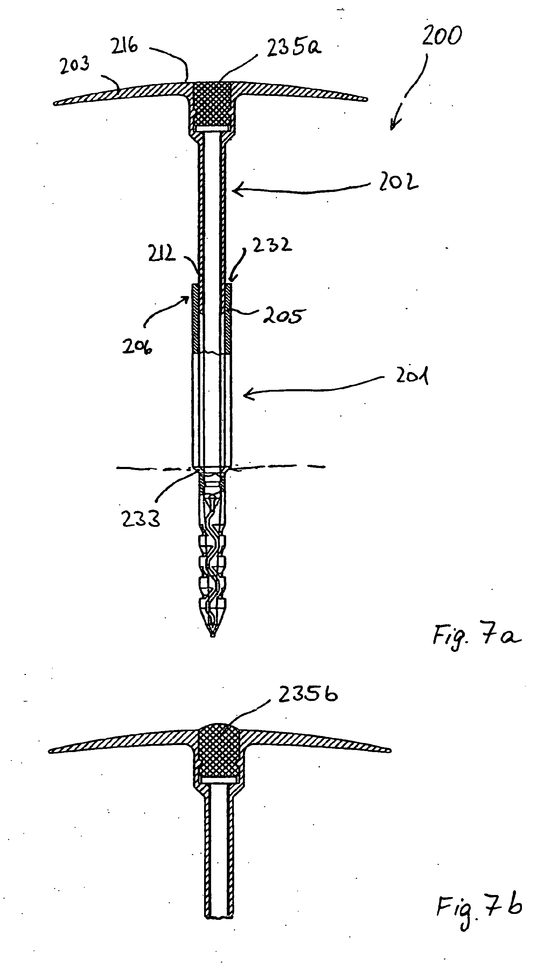

Das vorgeschlagene teleskopartige Verschieben kann dadurch realisiert werden, daß das Hülsenteil auf dem Dübelteil verschoben wird oder nach dem Umkehrprinzip der Hülsenteil in dem Dübelteil, was mit den Ausführungsformen nach den Fig. 6a und 7a verdeutlicht wird. Das Befestigungssystem 100 nach Fig. 6a besteht aus einem Dübelteil 101, wobei der Außendurchmesser des Hülsenschaftes 105 an seinem hinteren Ende 106 kleiner ist als der Innendurchmesser des Schaftes 112 am vorderen Ende 132 des Hülsenteils 102. Die Enden 106,132 greifen demnach ineinander ein und sind teleskopartig ineinander verschiebbar. Am Übergang zwischen dem Hülsenschaft 105 des Dübelteils 101 und dem aufspreizbaren Ende 107 des Dübelteils 101 ist eine äußere Abstützschulter 133 in Form eines Kragens angeordnet, der durch Auflage auf den Untergrund um das Bohrloch bewirkt, daß der Dübel bei Einführung des Spreizelementes 104 sich nicht von dem Schaft 112 löst. Dieser Kragen ist im Dübelteil 101 zwischen dem aufspreizbaren Teil 107 und dem Schaft 105 angeordnet. Mit 134 ist die Grenzfläche zwischen Untergrund und Bauteil bezeichnet.

Das einstückig mit dem Schaft des Hülsenteils ausgebildete Halteelement 103 weist im Vergleich zur Ausführungsform nach Fig. 1a,b einen größeren Durchmesser auf, welcher sich für den Einsatz von relativ weichen Bauteilen, wie Styroporplatten oder Platten aus hochverdichteter Steinwolle, empfiehlt. Halteelemente mit kleineren Durchmessern, wir gezeigt in Fig. 1a,b, kommen bevorzugt bei härteren Bauteilen zum Einsatz. Das System ist so vormontiert, daß der Dübelnagel 104 auf Anschlagflächen 122 in Form von Rastschultern im Innenschaft des Hülsenteils 102 aufliegt. Die verbleibende Aussparung zwischen dem Kopf 119 und der Oberseite 116 des Halteelementes 103 ist durch einen Stopfen 135a verschlossen, der ebenfalls aus Kunststoff gefertigt ist, der als Korrosionsschutz dient und ein gleichmäßiges Auftragen der späteren Putzschichten gewährleistet. Zum Einbringen wird mit Hammerschlägen bzw. Druck in Axialrichtung das Spreizelement in den Dübelteil 101 eingeschlagen; als Begrenzung des Verschiebeweges und des Vorspannweges dient ebenfalls das äußere Abstützelement 133 am hinteren Dübelteil.

Nach dem Umkehrprinzip besteht das Befestigungssystem 200 nach Fig. 7a aus einem Dübelteil 201, wobei der Innendurchmesser des Hülsenschaftes 205 des Dübelteils an dem hinteren Ende 206 größer ist als der Außendurchmesser des Schaftes 212 am vorderen Ende 232 des Hülsenteils 202. Eine äußere Abstützschulter 233 in Form eines Kragens wird in der Ausführungsform nach Fig. 7a durch die aufgeweitete Ausführung des Hülsenschaftes 205 des Dübelteils 201 erreicht.

Die Detailfig. 6b sowie 7b zeigen die bevorzugte Stopfenvariante mittels eines über die Oberseite 116, 216 des Haltetellers 103, 203 hinausragenden Stopfens 135b, 235b aus relativ hartem Kunststoff, der auch bei starken Prellschlägen nicht verformt.

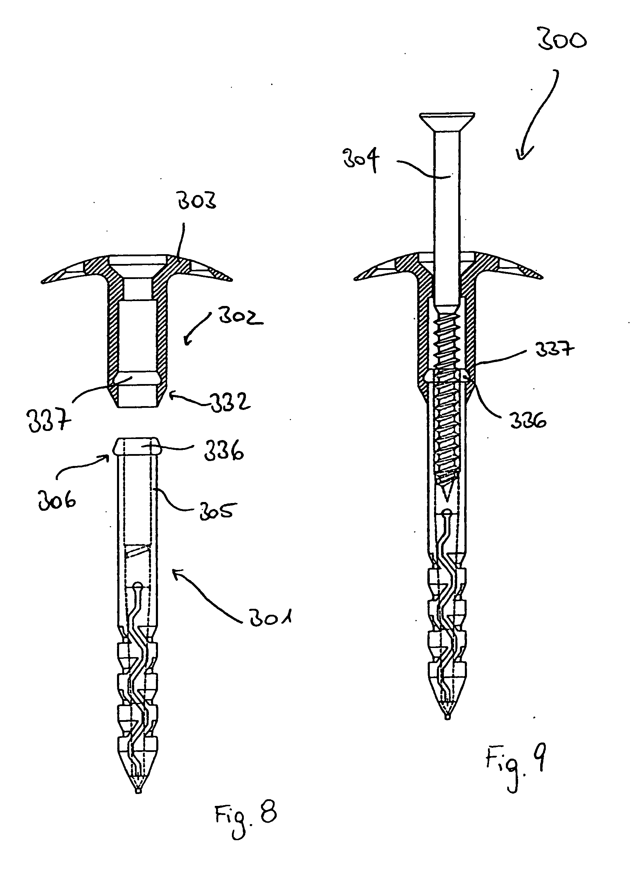

Ausgehend von der Ausführungsform nach Fig. 1a zeigen die nachfolgenden Beispiele andere Möglichkeiten der Vormontierung mit nachfolgendem teleskopartigen Verschieben des erfindungsgemäßen Befestigungssystems. Gemäß der Ausführungsform nach den Figuren 8 bis 10 weisen der Dübelteil 301 an dem hinteren Ende 306 seines Hülsenschaftes 305 eine Wulst und das Hülsenteil 302 an seinem vorderen Ende 332 in seiner Innenfläche eine zur Wulstfläche komplementäre Ausnehmung 337 auf. Das Dübelteil 301 wird unter Überwindung der elastischen Materialeigenschaften der Wulst mit dem Hülsenteil 302 und einer Schraube 304 vormontiert (Fig. 9). Die Wulst hat hierbei eine solche Form, daß sie als äußere Abstützschulter 336 verhindert, daß der Dübelteil 301 beim Einschlagen aus dem Hülsenteil herausgeschlagen wird.

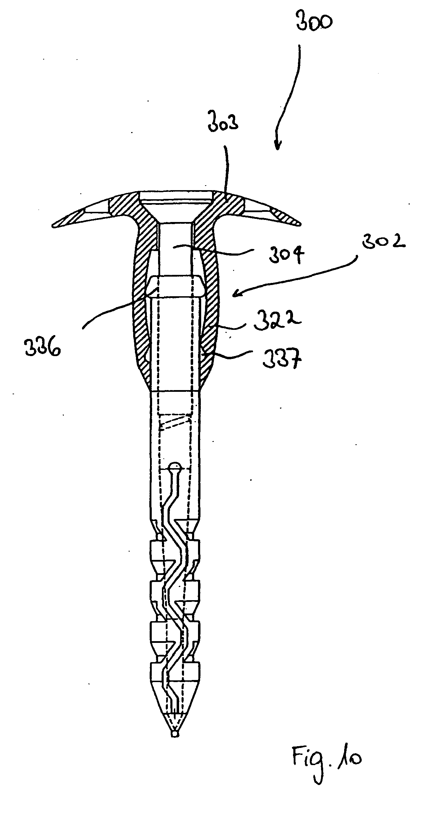

Während des Befestigungsvorgangs wird das Hülsenteils 302 gegen das Dübelteil 301 verspannt und das Hülsenteil 302 entlang dem Dübelteil nach Herausgleiten der Wulst 336 aus ihrer Aufnehmung 337 teleskopartig verschoben, wie in Fig. 10 gezeigt. Hierbei wölbt sich der Schaft 322 des Hülsenteils 302 tonnenartig auf, was sich günstig auf ein Verspannen des Hülsenteils 302 im Bauteil auswirkt. Die Lage der Schraube 304 in der Endmontagestellung ist mit gestrichelten Linien gekennzeichnet. Der Vorspannweg ist durch Anschlagen der Wulst 336 an Anschlagflächen am Hülsenteil begrenzt.

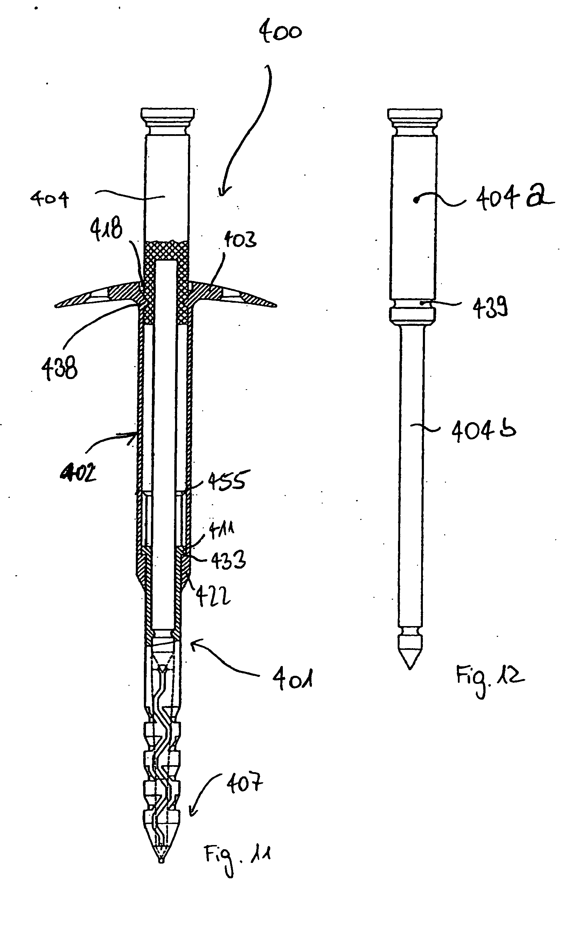

Gemäß dem in der Fig. 11 dargestellten Ausführungsbeispiel 400 des Befestigungssystems ist ein hier zweiteiliger Einschlagstift 404, der aus einem metallischen Stift 404b und einer darauf zur Gewährleistung der Knickstabilität beim Einschlagen mit Übergriff angeordneten Kunststoffhülse 404a besteht, die für eine gute Isolierung sorgt und mit der der metallische Stift mittelbar eingetrieben wird, durch einen in der Öffnung 418 des Halteelementes 403 vorgesehenen ringförmigem Kragen 438 aus einem elastischen Kunststoff-Material, der mit einer entsprechenden Ausnehmung 439 (vgl. Fig. 12) des Einschlagstiftes 404 in Eingriff kommt, vormontierbar. Der Verschiebeweg könnte bei dieser Ausführungsform wieder nach dem Feder-Nut-Prinzip ausgebildet. Bei der Montage wird der Stift 404 beispielsweise mit einem Hammer in den unteren Teil und somit aufspreizbaren Abschnitt 407 des Dübelteils 401 geschlagen und hierbei die elastische Vormontierung überwunden. Zur Vorspannung wird der Stift weiter eingeschlagen, wobei Anschlagmittel in Form von Anschlagkanten 455, die an der Innenfläche des Hülsenteils 402 angeordnet sind, die Bewegung des Stifts bei Kontakt mit der Kunststoffumhüllung 404a auf einen maximalen Weg begrenzen könnten.

Die Fig. 12 zeigt das Spreizelement 404a der Fig. 11, das entweder ein mit Kunststoff ummantelter metallischer Einschlagstift ist oder vollständig aus Kunststoff besteht.

Mittels der Vorsprünge 411 am hinteren Ende des Dübelteils 401 wird eine äußere Abstützschulter 433 gegenüber dem vorderen Ende des Hülsenteils 402 mit einer ersten Anschlagkante 422 gemäß Ausführungsform nach Fig. 1 erreicht.

Als Anschlagmittel zur Beschränkung des Verschiebeweges, insbesondere des Vorspannweges, ist eine zweite Anschlagkante 455 innerhalb des Hülsenschaftes 402 vorgesehen.

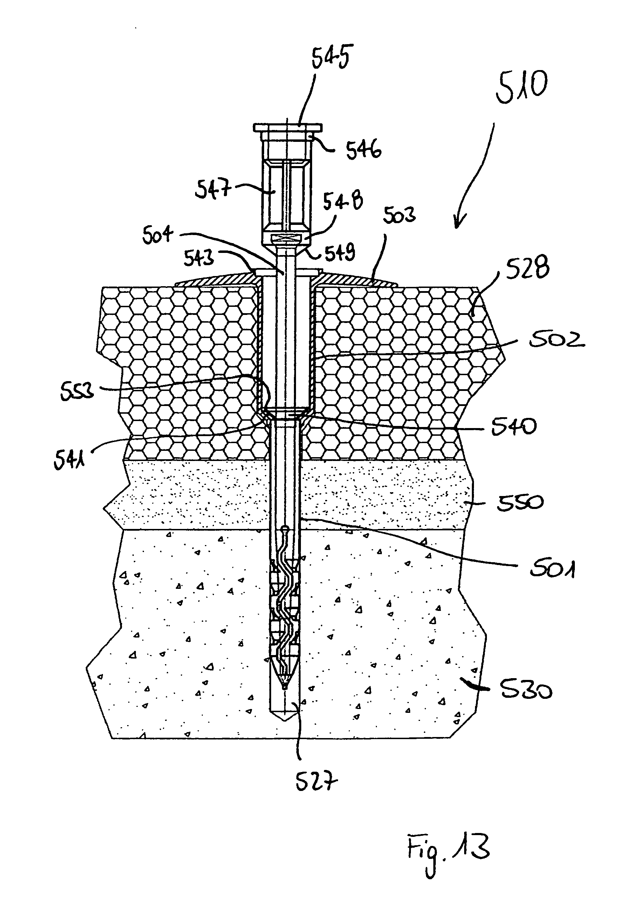

Fig. 13 zeigt die bevorzugte sechste Ausführungsform des Befestigungssystems. Dieses Befestigungssystem 510 besteht ebenfalls wieder aus den drei wesentlichen Bestandteilen, nämlich dem Dübelteil 501, dem Hülsenteil 502 mit einem einstückig an dem Hülsenteil 502 angeformten tellerförmigen Halteelement 503 bzw. Halteteller und einem Spreizelement 504, hier in Form einer Dübelnagelschraube. Die Bestandteile des Befestigungssystems nach der sechsten Ausführungsform werden mit entsprechenden Bezugszeichen im Vergleich zu den vorher beschriebenen Ausführungsformen bezeichnet.

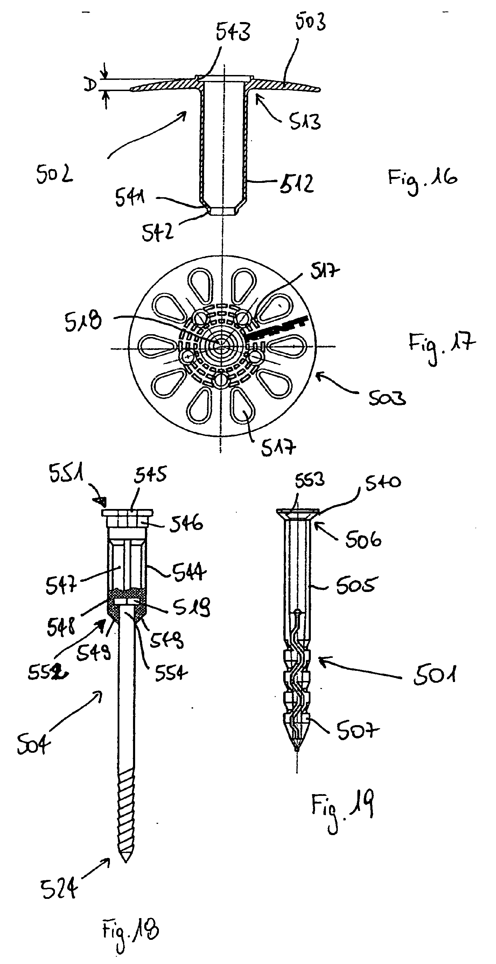

Der Dübelteil 501, der in Alleinstellung in Fig.19 gezeigt ist, besteht aus einem Hülsenschaft 505 an seinem hinteren Ende 506, d.h. dem Ende, welches nicht in Einsatzrichtung weist, und einem sich an den Hülsenschaft 505 in Einsatzrichtung anschließenden, vorderen, aufspreizbaren Ende 507. Bei dem gezeigten Ausführungsbeispiel weist der Dübelteil 501 am hinteren Ende des Hülsenschaftes 505 einen trichterförmigen Kopf als äußere Abstützschulter 540 auf; es könnte sich beispielsweise auch um einen Zylinderkopf oder um eine anders formatige Abstützschulter handeln. Bei diesem Dübelteil 501 bzw. Spreizdübel kann es sich um einen Standard-Langschaftdübel handeln, was ein besonderer Vorteil aufgrund guter Verfügbarkeit und niedriger Kosten ist.

Aus Fig. 13 ist ersichtlich, daß der Dübelteil 501 mit dem Hülsenteil 502 so verbunden ist, daß der Hülsenteil bzw. der Dübelteil teleskopartig gegeneinander verschiebbar sind. Hierzu ist der Innendurchmesser des Hülsenteils 502 größer als der Außendurchmesser des Dübelteils 501 ausgebildet. Der Dübelteil ist innerhalb des Hülsenteils bis zu dessen vorderen Ende, d.h. dem in Einführrichtung weisenden Ende, verschiebbar, bis die äußere Abstützschulter 540 des Dübelteils 501 bzw. dessen Anschlagflächen 553 an komplementär ausgeformte Anschlagflächen 541 des Hülsenteils 502 stoßen.

Der Hülsenteil 502 ist in den Fig. 16 und 17 im Detail dargestellt. Der Schaft 512 ist am vorderen Ende mit den Anschlagflächen 541 sowie Führungskanten 542 ausgebildet; an dem hinteren Ende 513 schließt sich das tellerförmige Halteelement 503 an. Zur Aufnahme bzw. Positionierung des Kopfaufsatzes des Spreizelements, welches weiter unten beschrieben wird, ist in dem Halteelement 503 bzw. Halteteller eine Anschlagschulter 543 eingeformt. Der Halteteller (503) selbst weist unterschiedlich ausgeformte Durchbrüche 517 (vgl. Fig. 17) auf. Die zentrische Öffnung für das Spreizelement ist mit 518 bezeichnet.

Das Spreizelement 504 besteht aus einem metallischen Schaft, der in Einsatzrichtung mit einer angeformten Spitze 524 und entgegen der Einsatzrichtung mit einem angeformten Kopf 519 versehen ist (vgl. Fig. 18). Dieser Kopf 519 ist mit einem Kopfaufsatz 544 bzw. einer Kopfummantelung aus Kunststoff umspritzt. Der Kopfaufsatz 544 besteht - gesehen von seinem hinteren Ende 551 zu seinem vorderen Ende 552- aus einem Anschlagelement 545, nachfolgend als Anschlagrand bezeichnet, der zur Positionierung des Spreizelementes im Hülsenteil 502 auf der Anschlagschulter 543 zur Auflage kommt. Benachbart zum Anschlagrand 545 weist der Kopfaufsatz 544 eine radiale Dichtfläche 546 auf. Im unteren Teil 548 des Kopfaufsatzes 544 sind der Kopf 519 bzw. ein Teil des Schaftes 554 der metallischen Schraube oder des Einschlagstiftes unlösbar eingegossen. Der Übergangsbereich oder Mittenbereich 547 zwischen Anschlagrand 545 bzw. radialer Dichtfläche 546 sowie dem unteren Teil des Kopfaufsatzes 544 ist durch einen Kunststoffkern mit Längsstreben oder Längsrillen gebildet, um Kunststoff zu sparen. Der untere Teil 548 des Kopfaufsatzes 544 ist als Anschlagende ausgebildet, indem komplementär geformte Kontakt - oder Anschlagflächen 549 für den beispielsweise trichterförmigen Kopf 540 des Dübelteils ausgebildet sind.

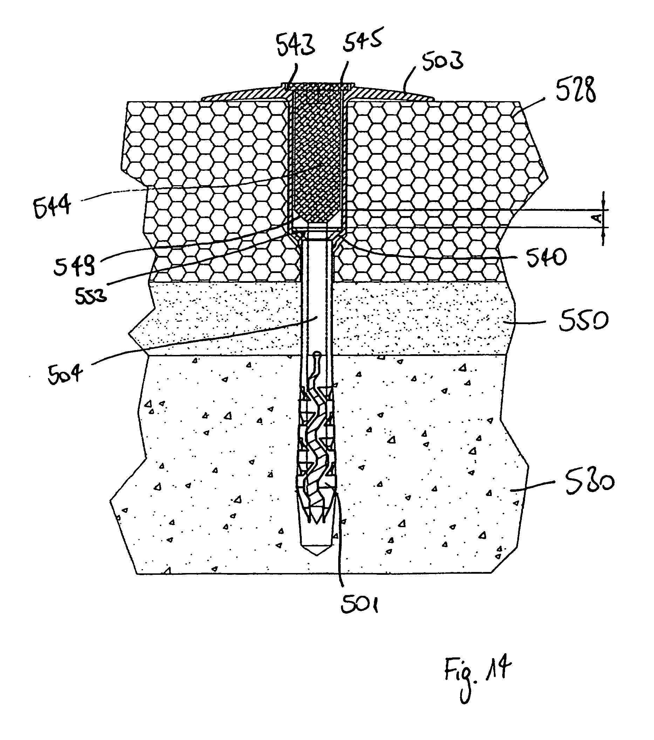

Mit Hilfe der Abfolge der Fig. 13 bis 15 wird nachfolgend die Montage des Befestigungssystems nach der sechsten Ausführungsform beschrieben. In ein, in die Isolierung (528), eine Putzschicht 550 und das Mauerwerk bzw. die Wand 530 eingebrachtes Bohrloch 527 werden der Dübelteil 501 mit dem Hülsenteil 502 eingesetzt. Das Halteelement 503 wird entsprechend der Dicke der Isolierung (528) durch teleskopartiges Verschieben des Hülsenteils 502 gegenüber dem Dübelteil 501 justiert. In diesem Montagestadium ist das Spreizelement 504 ggf. bereits lose vormontiert. Die Dübelnagelschraube 504 wird solange in den Dübelteil 501 eingeschlagen, bis der Anschlagrand 545 des Kopfaufsatzes 544 in der Anschlagschulter 543 des Halteelementes 503 positioniert ist (vgl. Fig. 14). In diesem Stadium liegt ein Abstand A zwischen dem unteren Teil 548 des Kopfaufsatzes 544 bzw. den Kontaktflächen 549 und dem trichterförmigen Kopf 540 des Dübelteils 501 vor. Es wird nun bis zur Aufhebung des Abstandes A weitergeschlagen, wobei der maximale Verschiebeweg und somit die maximale Verspannung und Verformung des Halteelementes 503 bzw. des Tellers durch den Abstand A beschränkt ist.

Anstelle einer Dübelnagelschraube kann auch eine Schraube Verwendung finden, wobei dann im Bereich des Anschlagrandes 545 bzw. der radialen Dichtfläche 546 eine Aussparung (nicht gezeigt) zur Aufnahme eines Drehwerkzeugs, beispielsweise ein Innensechskantwerkzeug, vorgesehen ist.

Es ist ersichtlich, daß der Abstand A durch die vom Hersteller bestimmte Länge L des Kopfaufsatzes 544 beeinflußt werden kann. Zudem ist der Abstand durch Wahl der Steigungen der Anschlagflächen des Kopfaufsatzes bzw. der Steigung des trichterförmigen Kopfes 540 einstellbar. Wenn ein Isoliermaterial beispielsweise sehr empfindlich ist und bei der Montage fast nicht verformt werden darf, muß der Abstand A sehr klein eingestellt werden. Es ist aber darauf zu achten, daß der Abstand A wenigstens der Dicke des Halteelementes entspricht, um zu gewährleisten, daß eine Verformung des Haltetellers und somit ein Anpreßdruck entsteht. Bei weniger empfindlichem Material kann der Abstand A größer gewählt werden, was durch den größeren Verschiebeweg eine größere Verspannung erlaubt.

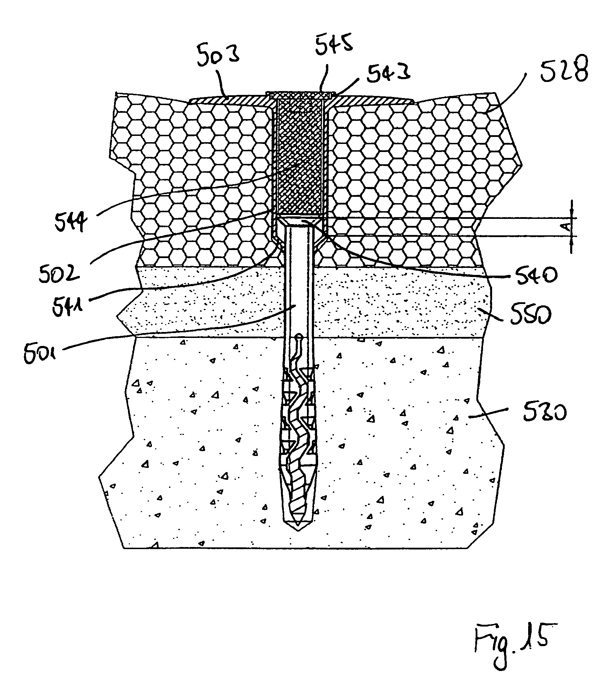

Wenn die konisch zulaufenden Kontakt- bzw. Anschlagflächen 549 des Kopfaufsatzes 544 im Kopf 540 des Dübelteils 501 versenkt sind, ist kein weiteres Einschrauben oder Einschlagen mehr möglich. Mit dem Versenken des unteren Teils 548 des Kopfaufsatzes 544 in den Dübelteil 501 bewegt sich der Hülsenteil 502 teleskopartig entlang des Schaftes 505 des Dübelteils 501 entsprechend der Länge des Verschiebewegs bzw. dem überwundenen Abstand A. Auf diese Weise wird durch das Befestigungssystem als solches erreicht, daß das Spreizelement nicht überdreht oder zu weit eingeschlagen werden kann. Dies hätte nämlich zur Folge, daß das Isoliermaterial zu weit verformt wird mit entsprechenden Dellen im Material. Fig. 15 macht diesen Endmontagezustand nach Überwindung des Abstandes A deutlich, wobei auch die Anpressung des Haltetellers und somit sichere Befestigung bei zulässiger Verformung des Isoliermaterials zu erkennen ist.

Der Vergleich der Fig. 13, 14 und 15 macht auch sichtbar, daß zur ordnungsgemäßen Funktion des dreiteiligen Befestigungssystems das Bohrich immer etwas tiefer als passend eingeohrt werden muß, um zu gewährleisten, daß der Spreizkörper beim Vorspannvorgang nicht an den Bohrlochgrund stößt und ein Vorspannen verhindert.

Neben der sichtbaren Kontrolle durch Verformung des Haltetellers kann die Qualität im Anschluß der Montage über eine Drehmomentprüfung geprüft werden.

Mittels des erfindungsgemäß vorgeschlagenen Befestigungssystems wird allgemein mit einem einzigen System eine sichere Befestigung auch von unterschiedlich beschaffenen oder in ihrer Dicke schwankenden Bauteilen an einer Wand durch ein teleskopartiges Verschieben des Hülsenteils gegenüber dem Dübelteil und damit durch ein Verspannen in einer optimal angepaßten Lage erreicht.

## Patentansprüche

1. Befestigungssystem für Bauteile (28) an einer Wand 30 mit einem in eine Bohrung (29) der Wand einsetzbaren Dübelteil (1, 101, 201, 301, 401, 501) aus Kunststoff mit einem Hülsenschaft (5, 105, 205, 305, 405, 505), der zu seinem vorderen Einsatzende (7, 107) hin aufspreizbar ist,
und einem davon unabhängigen Hülsenteil (2, 102, 202, 302, 502) aus Kunststoff mit an seinem hinteren Schaftende ausgeformten tellerförmigen Halteelement (3, 103, 203, 403, 503),
einem als Spreizelement für den Dübelteil vorgesehenen Stift, Schraube oder dergleichen (4, 104, 304, 404, 404a, 504), der im Hülsenteil bis zur Anlage seines Kopfes versenkbar ist,
und wobei der Hülsenteil (2, 102, 202, 302, 502) an den Dübelteil (1, 101, 201, 301, 401, 501) derart angepasst ist, dass der Hülsenteil mit Halteelement gegenüber dem Dübelteil teleskopartig verschiebbar ist, wobei das Befestigungssystem unter Verformung des Halteelementes gegenüber dem Bauteil verspannbar ist,
**dadurch gekennzeichnet,**
**dass** zur Zusammenhaltsicherung des Dübelteils mit dem Hülsenteil einerseits der Hülsenteil (2, 102, 202, 302, 502) mit Anschlagflächen (20, 122, 438, 543) in seinem tellerförmigen Halteelement (3, 103, 203, 403, 503) ausgebildet ist, an denen das Spreizelement (4, 104, 304, 404, 404a, 504) beim Einschieben in den Dübelteil (1, 101, 201, 301, 401, 501) unmittelbar zur Auflage kommt, wonach Dübel- und Hülsenteil ineinander verschiebbar sind und andererseits der Hülsenteil und an einem hinteren Endbereich der Dübelteil mit den telekopierbaren Verschiebeweg zwischen Dübel- und Hülsenteil begrenzenden Anschlagflächen (22, 23; 337, 422 bzw. 11a, 11b, 133, 233, 336, 433) ausgebildet sind.

2. Befestigungssystem nach Anspruch 1,
**dadurch gekennzeichnet,**
**dass** es Anschlagmittel (55, 455, 549) aufweist, die als Verlängerung (56) des hinteren Endes des Hülsenschaftes (5) über eine äußere Abstützschulter (23, 433) des Dübelteils (1, 401) hinaus ausgebildet sind.

3. Befestigungssystem nach Anspruch 2,
**dadurch gekennzeichnet,**
**dass** die Anschlagmittel durch eine Anschlagkante (549) am vorderen Ende (552) eines Kopfaufsatzes (544) des Spreizelementes (504) gebildet sind.

4. Befestigungssystem nach einem der Ansprüche 1 bis 3,
**dadurch gekennzeichnet,**
**dass** als Verdrehsicherung des Dübelteils zum Hülsenteil am Hülsenschaft (5) des Dübelteils (1) oder an dem Hülsentell mindestens ein Vorsprung (11a-d) vorgesehen ist, der mit jeweils einer komplementären Nut (21 a-d) in Eingriff kommt, die in den Hülsenteil (2) oder in den Hülsenschaft des Dübelteils eingebracht ist.

5. Befestigungssystem nach einem der Ansprüche 1 bis 4,
**dadurch gekennzeichnet,**
**dass** der Dübelteil (301) an dem hinteren Ende (306) seines Hülsenschaftes (305) eine wulstförmige Kante (336) aufweist, und der Hülsenteil (302) an seinem vorderen Ende (332) in seiner Innenfläche eine zur Wulstfläche komplementäre Ausnehmung (337) aufweist, dass in einem vormontierten Zustand die Wulstfläche des Dübelteils und die Ausnehmung des Hülsenteils formschlüssig ineinander liegen, und dass im Gebrauchszustand das Hülsenteil unter Überwindung des Formschlusses teleskopartig gegenüber dem Hülsenteil verschiebbar ist, wobei sich das Hülsenteil tonnenförmig aufwölbt.

6. Befestigungssystem nach einem der Ansprüche 1 bis 4,
**dadurch gekennzeichnet,**
**dass** der Hülsenteil eine wulstförmige Auswölbung (438) auf seiner Innenseite aufweist und das Spreizelement (404, 404a) eine zur wulstförmigen Auswölbung komplementäre Ausnehmung (439) aufweist, dass in einem vormontierten Zustand die Auswölbung (438) des Hülsenteils und die Ausnehmung (439) des Stiftes formschlüssig ineinander liegen, und dass im Gebrauchszustand das Spreizelement unter Überwindung des Formschlusses in das Dübelteil verschiebbar ist.

7. Befestigungssystem nach einem der Ansprüche 1 bis 6,
**dadurch gekennzeichnet,**
**dass** innerhalb der Öffnung im Hülsenteil Anschlagflächen (122) für den endseitigen Kopf (119) des Spreizelementes (104) vorgesehen sind, welche so angeordnet sind, dass der Kopf des Spreizelementes entweder bündig mit der Oberseite (116) des Halteelements (3) oder in einem Abstand zu der Oberseite (116) des Halteelementes (103) aufliegt, und dass der sich ergebende Zwischenraum mit einem Stopfen (135a, 235b) aufgefüllt ist.

8. Befestigungssystem nach einem der Ansprüche 1 bis 4,
**dadurch gekennzeichnet,**
**dass** das Spreizelement (504) einen Kopfaufsatz (544) mit einem hinteren Beaufschlagungsende (551) und einem vorderen Ende (552) aufweist, dass dieser Kopfaufsatz (544) an seinem hinteren Beaufschlagungsende (551) mit einem Anschlagelement (545) versehen ist, das auf einer entsprechenden Anschlagschulter (543) am Hülsenteil (503) zur Auflage im Einführungszustand kommt,
**dass** das vordere Ende (552) des Kopfaufsatzes (544) eine Anschlagkante (549) aufweist,
- wobei im Einführungszustand, bei dem das Spreizelement (504) mit dem Anschlagelement (545) seines Kopfaufsatzes (544) auf der Anschlagschulter (543) des Hülsenteils (502) zur Auflage kommt, ein Abstand (A) zwischen der Anschlagkante (549) des Kopfaufsatzes (544) und der äußeren Abstützschulter (553) am Dübelteil 501) verbleibt,
und wobei ein weiteres Einführen des Spreizelementes (504) unter Vorspannung durch diesen Abstand (A) auf ein vorgegebenes Maß beschränkt ist.

9. Befestigungssystem nach Anspruch 8,
**dadurch gekennzeichnet,**
**dass** der Abstand (A) und somit der Vorspannweg durch Wahl der Steigung der äußeren Abstützschulter (533) des Dübelteils (501) einstellbar ist.

10. Befestigungssystem nach Anspruch 8 oder 9,
**dadurch gekennzeichnet,**
**dass** das hintere Ende (506) des Hülsenschaftes (505) des Dübelteils (501) mit einem trichterförmigen Kopf (504) ausgebildet ist, der die Anschlagschulter (553) für eine komplementär ausgebildete Anschlagkante (553) des Kopfaufsatzes (544) des Spreizelementes (504) bildet, und die Wahl der Steigung des Trichters den Versenkweg des Kopfaufsatzes (544) in den Dübelkopf (540) und somit den Abstand (A) oder einen Teilabstand vorgibt.

11. Befestigungssystem nach einem der Ansprüche 8 bis 10,
**dadurch gekennzeichnet,**
**dass** der Abstand (A) und somit der Vorspannweg durch die Wahl der Länge (L) des Kopfaufsatzes (544) einstellbar ist.

12. Befestigungssystem nach einem der Ansprüche 8 bis 11,
**dadurch gekennzeichnet,**
**dass** der Abstand (A) und somit der Vorspannweg mindestens der Dicke (D) des Halteelementes (502) entspricht.

13. Befestigungssystem nach einem der Ansprüche 8 bis 12,
**dadurch gekennzeichnet,**
**dass** der Kopfaufsatz (544) unlösbar mit dem Kopf (519) des Spreizelementes (504) und gegebenenfalls einem Teil des Spreizelementschaftes (554) verbunden ist.

14. Befestigungssystem nach einem der Ansprüche 8 bis 13,
**dadurch gekennzeichnet,**
**dass** der Kopfaufsatz (544) unterhalb des Anschlagelementes (545) eine radiale Dichtfläche (546) sowie ein Mittelstück, umfassend einen Kunststoffkern (547) mit Längsrillen, sowie den Aufnahmebereich (548) für den Spreizelementkopf (519) bzw. -schaft (554) aufweist.

15. Befestigungssystem nach einem der Ansprüche 8 bis 14,
**dadurch gekennzeichnet,**
**dass** der Kopfaufsatz (544) aus Kunststoff besteht.

## Claims

1. A fastening system for fastening components (28) to a wall 30, the system comprising a dowel part (1, 101, 201, 301, 401, 501) made of plastic, which dowel part can be inserted into a borehole (29) of the wall and has a sleeve shank (5, 105, 205, 305, 405, 505) which is expandable towards its front insertion end (7, 107),
and a sleeve part (2, 102, 202, 302, 502) made of plastic, which sleeve part is independent thereof and has a plate-shaped retaining element (3, 103, 203, 403, 503) formed on its rear shank end,
and a pin, screw or the like (4, 104, 304, 404, 404a, 504) which is provided as expanding element for the dowel part and can be sunk into the sleeve part until its head comes to an abutment,
and wherein the sleeve part (2, 102, 202, 302, 502) is adapted to the dowel part (1, 101, 201, 301, 401, 501) in such a manner that the sleeve part with retaining element is telescopically displaceable relative to the dowel part, wherein the fastening element, under deformation of the retaining element, can be braced with respect to the component while deforming the retaining element,
**characterized in**
**that** for securing the bond of the dowel part with the sleeve part, on the one hand, the sleeve part (2, 102, 202, 302, 502) is provided with abutment faces (20, 122, 438, 543) in its plate-shaped retaining element (3, 103, 203, 403, 503), on which abutment faces the expanding element (4, 104, 304, 404, 404a, 504) comes directly to rest during the insertion into the dowel part (1, 101, 201, 301, 401, 501), whereupon dowel part and sleeve part can be displaced into one another and, on the other hand, the sleeve part and, at a rear end region, the dowel part are provided with abutment faces (22, 23, 337, 422 and 11 a, 11 b, 133, 233, 336, 433, respectively) limiting the telescopic displacement path between dowel part and sleeve part.

2. The fastening system according to claim 1,
**characterized in**
**that** it has abutment means (55, 455, 549) which are formed as extension (56) of the rear end of the sleeve shank (5) and extend beyond an outer support shoulder (23, 433) of the dowel (1, 401).

3. The fastening system according to claim 2,
**characterized in**
**that** the abutment means are formed by an abutment edge (549) at the front end (552) of a head attachment (544) of the expanding element (504).

4. The fastening system according to any one of the claims 1 to 3,
**characterized in**
**that** for preventing a rotation of the dowel part relative to the sleeve part at least one projection (11a-d) is provided on the sleeve shank (5) of the dowel part (1) or on the sleeve part, which projection comes into engagement in each case with one complementary groove (21 a-d) which is incorporated in the sleeve part (2) or in the sleeve shank of the dowel part.

5. The fastening system according to any one of the claims 1 to 4,
**characterized in**
**that** the dowel part (301) has a bead-shaped edge (336) on the rear end (306) of its sleeve shank (305), and the sleeve part (302), on its front end (332) in its inner surface, has a recess (337) which is complementary to the beaded face, and that in a pre-assembled state, the beaded face of the dowel part and the recess of the sleeve part positively engage with one another, and that in the state of use, the sleeve part, by overcoming the positive lock, is telescopically displaceable relative to the sleeve part, wherein the sleeve part bulges into a barrel-shaped form.

6. The fastening system according to any one of the claims 1 to 4,
**characterized in**
**that** the sleeve part has a bead-shaped bulge (438) on its inner side and the expanding element (404, 404a) has a recess (439) which is complementary to the bead-shaped bulge, that in a pre-assembled state, the bulge (438) of the sleeve part and the recess (439) of the pin are positively engaged with one another, and that in the state of use, the expanding element, by overcoming the positive lock, can be displaced into the dowel part.

7. The fastening system according to any one of the claims 1 to 6,
**characterized in**
**that** within the opening in the sleeve part, abutment faces (122) for the head (119) on the end side of the expanding element (104) are provided which are arranged in such a manner that the head of the expanding element abuts flush with the upper side (116) of the retaining element (3) or at a distance from the upper side (116) of the retaining element (103), and that the resulting intermediate space is filled with a plug (135a, 235b).

8. The fastening system according to any one of the claims 1 to 4,
**characterized in**
**that** the expanding element (504) has a head attachment (544) with a rear load-bearing end (551) and a front end (552), that said head attachment (544) is provided at its rear load-bearing end (551) with an abutment element (545) which, in the insertion state, comes to rest on a corresponding abutment shoulder (543) on the sleeve part (503), that the front end (552) of the head attachment (544) has an abutment edge (549),
wherein in the insertion state in which the expanding element (504) comes to rest with the abutment element (545) of its head attachment (544) on the abutment shoulder (543) of the sleeve part (502), a distance (A) remains between the abutment edge (549) of the head attachment (544) and the outer support shoulder (553) on the dowel part (501),
and wherein a further insertion of the expanding element (504) under preload is limited by said distance (A) to a predefined dimension.

9. The fastening system according to claim 8, **characterized in**
**that** the distance (A) and thus the preload path is adjustable through the selection of the pitch of the outer support shoulder (533) of the dowel part (501).

10. The fastening system according to claim 8 or claim 9,
**characterized in**
**that** the rear end (506) of the sleeve shank (505) of the dowel part (501) is formed with a funnel-shaped head (504) which forms the abutment shoulder (553) for a complimentarily formed abutment edge (553) of the head attachment (544) of the expanding element (504), and the selection of the pitch of the funnel defines the sinking path of the head attachment (544) in the dowel head (540) and thus the distance (A) or a partial distance.

11. The fastening system according to any one of the claims 8 to 10,
**characterized in**
**that** the distance (A) and thus the preload path is adjustable through the selection of the length (L) of the head attachment (544).

12. The fastening system according to any one of the claims 8 to 11,
**characterized in**
**that** the distance (A) and thus the preload path corresponds to at least the thickness (D) of the retaining element (502).

13. The fastening system according to any one of the claims 8 to 12,
**characterized in**
**that** the head attachment (544) is non-detachably connected to the head (519) of the expanding element (504) and optionally to a part of the expanding element shank (554).

14. The fastening system according to any one of the claims 8 to 13,
**characterized in**
**that** below the abutment element (545), the head attachment (544) has a radial sealing face (546) as well as a center piece comprising the plastic core (547) with longitudinal notches, as well as the receiving area (548) for the expanding element head (519) or expanding element shank (554).

15. The fastening system according to any one of the claims 8 to 14,
**characterized in**
**that** the head attachment (544) is made of plastic.

## Revendications

1. Système de fixation d'éléments de construction (28) sur un mur (30) avec une partie cheville (1, 101, 201, 301, 401, 501) en matière plastique insérable dans un perçage (29) dans le mur, avec une tige en douille (5, 105, 205, 305, 405, 505), qui est expansible en direction de son extrémité antérieure d'insertion (7, 107)
et avec une partie douille (2, 102, 202, 302, 502) en matière plastique indépendante de cette dernière, avec sur son extrémité arrière de tige un élément de maintien (3, 103, 203, 403, 503) en forme de disque,
une tige, vis ou similaire (4, 104, 304, 404, 404a, 504)) prévue en tant qu'élément d'expansion pour la partie cheville qui est susceptible de s'enfoncer dans la partie douille jusqu'à appui de sa tête,
et la partie douille (2, 102, 202, 302, 502) étant adaptée à la partie cheville (1, 101, 201, 301, 401, 501) de sorte que la partie douille avec l'élément de maintien soit susceptible d'être déplacée de façon télescopique par rapport à la partie cheville, le système de fixation étant susceptible d'être mis sous contrainte par déformation de l'élément de maintien par rapport à l'élément de construction,
**caractérisé en ce que**
pour le blocage de l'assemblage de la partie cheville avec la partie douille, la partie douille (2, 102, 202, 302, 502) est réalisée d'une part avec des surfaces d'appui (20, 122, 438, 543) dans son élément de maintien en forme de disque (3, 103, 203, 403, 503) sur lesquelles l'élément d'expansion (4, 104, 304, 404, 404a, 504) vient directement s'appliquer lors de l'insertion dans la partie cheville (1, 101, 201, 301, 401, 501), suite à quoi la partie cheville et la partie douille sont susceptibles de se déplacer l'une dans l'autre et d'autre part, la partie douille et sur une zone d'extrémité arrière, la partie cheville étant conçues avec des surfaces de butée (22, 23 ; 337, 422 ou 11 a, 11 b, 133, 233, 336, 433) limitant le trajet de déplacement télescopique entre la partie cheville et la partie douille.

2. Système de fixation selon la revendication 1,
**caractérisé en ce qu'**il comporte des moyens de butée (55, 455, 549) qui en tant que prolongement (56) de l'extrémité arrière de la tige en douille (5) sont conçues par delà un épaulement d'appui extérieur (23, 433) de la partie douille (1, 401).

3. Système de fixation selon la revendication 2,
**caractérisé en ce que** les moyens de butée sont formés par une arête de butée (549) sur l'extrémité antérieure (552) d'un chapeau de tête (544) de l'élément d'expansion (504).

4. Système de fixation selon l'une quelconque des revendications 1 à 3, **caractérisé en ce qu'**en tant que sécurité contre la rotation de la partie cheville par rapport à la partie douille, il est prévu sur la tige en douille (5) de la partie cheville (1) ou sur la partie douille au moins une saillie (11 a à d) qui vient s'engager chaque fois dans une rainure complémentaire (21 a à d) qui est ménagée dans la partie douille (2) ou dans la tige en douille de la partie cheville.

5. Système de fixation selon l'une quelconque des revendications 1 à 4, **caractérisé en ce que** la partie cheville (301) comporte sur l'extrémité arrière (306) de sa tige en douille (305) une arête en forme de bourrelet (336) et **en ce que** la partie douille (302) comporte sur son extrémité antérieure (332), dans sa surface intérieure un évidement (337) complémentaire à la surface en bourrelet, **en ce que** dans une position de prémontage, la surface en bourrelet de la partie cheville et l'évidement de la partie douille sont placés l'un dans l'autre par complémentarité de forme et **en ce que** dans une position d'utilisation, la partie douille est déplaçable de façon télescopique par rapport à la partie douille, en surmontant la complémentarité de forme, la partie douille se bombant en forme de tonneau.

6. Système de fixation selon l'une quelconque des revendications 1 à 4, **caractérisé en ce que** la partie douille comporte sur sa face intérieure un bombement en forme de bourrelet (438) et **en ce que** l'élément d'expansion (404, 404a) comporte un évidement (439) complémentaire au bombement en forme de bourrelet, **en ce que** dans une position de prémontage, le bombement (438) de la partie douille et l'évidement (439) de la tige sont placés l'un dans l'autre par complémentarité de forme et **en ce qu'**en position d'utilisation, l'élément d'expansion est déplaçable dans la partie cheville en surmontant le complémentarité de forme.

7. Système de fixation selon l'une quelconque des revendications 1 à 6, **caractérisé en ce qu'**à l'intérieur de l'évidement dans la partie douille sont prévues des surfaces de butée (122) pour la tête (119) côté extrémité de l'élément d'expansion (104), lesquelles sont disposées de sorte que la tête de l'élément d'expansion s'applique soit à fleur de la face supérieure (116) de l'élément de maintien (3) ou à une distance par rapport à la face supérieure (116) de l'élément de maintien (103) et **en ce que** l'espace intermédiaire qui en résulte est rempli par un bouchon (1 35a, 235b).

8. Système de fixation selon l'une quelconque des revendications 1 à 4, **caractérisé**
**en ce que** l'élément d'expansion (504) comporte un chapeau de tête (544) avec une extrémité arrière d'admission (551) et une extrémité antérieure (552),
**en ce que** sur son extrémité arrière d'admission (551), ce chapeau de tête (544) est muni d'un élément de butée (545) qui en position introduite vient s'appuyer sur un épaulement de butée (543) correspondant sur la partie douille (503),
**en ce que** l'extrémité antérieure (552) du chapeau de tête (544) comporte une arête de buée (549),
en position d'introduction, dans laquelle l'élément d'expansion (504) vient s'appuyer avec l'élément de butée (545) de son chapeau de tête (544) sur l'épaulement de butée (543) de la partie douille (502), un écart (A) reste ménagé entre l'arête de butée (549) du chapeau de tête (544) et l'épaulement d'appui extérieur (553) sur la partie cheville (501),
et une introduction plus poussée de l'élément d'expansion (504) sous précontrainte étant limitée par ledit écart (A) à une dimension prédéfinie.

9. Système de fixation selon la revendication 8, **caractérisé en ce que** l'écart (A) et donc la course de précontrainte est réglable par choix de l'inclinaison de l'épaulement d'appui extérieur (533) de la partie cheville (501).

10. Elément de fixation selon la revendication 8 ou 9,
**caractérisé en ce que** l'extrémité arrière (506) de la tige en douille (505) de la partie cheville (501) est conçue avec une tête en forme de trémie (504) qui forme l'épaulement de butée (553) pour une arête de butée (553) conçue de façon complémentaire du chapeau de tête (544) de l'élément d'expansion (504) et **en ce que** le choix de l'inclinaison de la trémie prédéfinit le trajet d'enfoncement du chapeau de tête (544) dans la tête de cheville (540) et donc l'écart (A) ou un écart partiel.

11. Système de fixation selon l'une quelconque des revendications 8 à 10, **caractérisé en ce que** l'écart (A) et donc le trajet de précontrainte est réglable par choix de la longueur (L) du chapeau de tête (544).

12. Système de fixation selon l'une quelconque des revendications 8 à 11, **caractérisé en ce que** l'écart (A) et donc le trajet de précontrainte correspond au moins à l'épaisseur (D) de l'élément de maintien (502).

13. Système de fixation selon l'une quelconque des revendications 8 à 12, **caractérisé en ce que** le chapeau de tête (544) est relié de façon inamovible avec la tête (519) de l'élément d'expansion (504) et le cas échéant avec une partie de la tige de l'élément d'expansion (554).

14. Système de fixation selon l'une quelconque des revendications 8 à 13, **caractérisé en ce que** le chapeau de tête (544) comporte sous l'élément de butée (545) une surface d'étanchéité radiale (548) ainsi qu'une pièce centrale, comprenant un noyau en matière plastique (547) avec des stries longitudinales, ainsi que la zone de logement (548) pour la tête de l'élément d'expansion (519) ou de la tige d'expansion (554).

15. Système de fixation selon l'une quelconque des revendications 8 à 14, **caractérisé en ce que** le chapeau de tête (544) est en matière plastique.
